# EUROPEAN PATENT APPLICATION

(11) **EP 4 772 392 A1**
(43) Date of publication of application: **08.07.2026**
(21) Application number: 24864514.5
(22) Date of filing: 04.09.2024
(51) Int. Cl.: B60N 2/28, B60N 2/26

(54) **SUPPORTING LEG STRUCTURE AND CHILD SAFETY SEAT**

(30) Priority: 11.09.2023 CN 202322475467 U
(71) Applicant: Ningbo Baby First Baby Products Co., Ltd., Ningbo, Zhejiang 315412 (CN)
(72) Inventor: CAO, Wenyong, Ningbo, Zhejiang 315412 (CN); ZHANG, Yeye, Ningbo, Zhejiang 315412 (CN)
(74) Representative: Lorenz Seidler Gossel Part. mbB
(86) International application number: PCT/CN2024/116820
(87) International publication number: WO 2025/055794

(57) **Abstract**

Disclosed are a support leg structure and a child safety seat including the same. The support leg structure includes a seat base, and a seat cover arranged on the seat base. A supporting assembly is arranged on the seat base. The supporting assembly is configured to extend or retract relative to the seat base to switch between a retracted state and a service state. A height indication member is movably arranged on the seat cover. At least one indication area is arranged on the height indication member. An indication window corresponding to the height indication member is provided on the seat cover. When the supporting assembly switches between the retracted state and the service state, the supporting assembly is configured to drive the height indication member to slide relative to the indication window, to expose one of the at least one indication area through the indication window. When the supporting assembly is in the retracted state or the service state, the height indication member can show a corresponding height range, allowing a user to determine whether the supporting assembly needs to be used by comparing the height range shown by the height indication member with a height of a child using the safety seat.

## Description

### TECHNICAL FIELD

The present invention relates to the field of child safety seats, and specifically to a support leg structure and a child safety seat including the same.

### BACKGROUND

Child safety seats are a type of seats specially designed for children of different heights or ages and installed in vehicles to restrain children to effectively improve the children's safety during driving. The bottom of the seat can be fixed, so that when the vehicle brakes suddenly, starts, or accelerates, the child occupant will not be affected by the sudden movement. Most child safety seats are provided with a support leg structure at the bottom. The support leg structure is an anti-overturning device that can support the entire safety seat and enhance the stability of the seat, thereby preventing the seat from turning over when the vehicle suddenly brakes.

For some tall children, there is no need to use the support leg structure when using the safety seat, because the support leg structure will occupy the legroom of the child and collide with the legs of the child during driving, posing a safety risk. However, many parents does not know a height range of children who require the use of the support leg structure. As a result, the support leg structure of the child safety seat is often used incorrectly by parents. Such incorrect use of the support leg structure can cause significant harm to both the child safety seat and the child using it.

### SUMMARY

An objective of the present invention is to provide a support leg structure to solve the problem that the existing support leg structures of child safety seats lack an indication of applicable child heights.

Another objective of the present invention is to provide a child safety seat.

To achieve the above objectives, the following technical solution is adopted in the present invention. A support leg structure is provided, including a seat base, and a seat cover arranged on the seat base, where a supporting assembly is slidably arranged on the seat base, the supporting assembly is configured to extend or retract relative to the seat base to switch between a retracted state and a service state, a height indication member is movably arranged on the seat cover, at least one indication area is arranged on the height indication member, the at least one indication area is configured to show different height ranges, an indication window corresponding to the height indication member is provided on the seat cover, and when the supporting assembly switches between the retracted state and the service state, the supporting assembly is configured to drive the height indication member to slide relative to the indication window, to expose one of the at least one indication area through the indication window.

Preferably, the height indication member is provided with a second slide groove, the second slide groove extends in a length direction of the height indication member, a positioning column configured to fit to the second slide groove is arranged on the seat cover, and the height indication member is configured to be driven by the supporting assembly to slide between a first working position and a second working position.

Preferably, a first indication area and a second indication area are arranged on the height indication member, the first indication area is configured to show a height range not requiring use of the supporting assembly, the second indication area is configured to show a height range requiring the use of the supporting assembly, the first indication area is exposed through the indication window when the height indication member slides to the first working position, and the second indication area is exposed through the indication window when the height indication member slides to the second working position.

Further preferably, values in the height range shown in the first indication area are greater than values in the height range shown in the second indication area.

Further, the supporting assembly includes a connection base movably arranged in the seat base and a supporting member arranged on the connection base, the supporting member extends to outside of the seat base, the supporting member is operable to drive the connection base to slide back and forth between an extended position and a retracted position, the connection base is at the retracted position when the supporting assembly is in the retracted state, and the connection base is at the extended position when the supporting assembly is in the service state.

Further, the seat base is provided with a locking assembly configured to fit to the connection base, and the locking assembly is configured to lock the connection base to retrain the connection base at the extended position or the retracted position, to keep the supporting assembly in the service state or the retracted state.

Further, the supporting member includes an inner tube and an outer tube vertically slidably connected to each other, a top of the outer tube is arranged on the connection base, a bottom of the inner tube is configured to press against a base plate of a vehicle compartment, and an adjustment assembly is arranged between the inner tube and the outer tube to achieve mutual locking and multi-level adjustment of the inner tube and the outer tube.

Further, a pressing block is arranged on the connection base, the pressing block is configured to press against and fit to the height indication member, and when the connection base slides from the retracted position to the extended position, the connection base is configured to drive, through the pressing block, the height indication member to slide from the first working position to the second working position.

Further, an elastic reset member is arranged between the seat cover and the height indication member, the elastic reset member is configured to continuously apply an acting force to cause the height indication member to move toward the first working position, and when an external force applied by the connection base to the height indication member is released, the height indication member is configured to be reset from the second working position to the first working position under action of the elastic reset member.

Another aspect of the present invention provides a child safety seat including the support leg structure described above.

Compared with the prior art, the present invention has the following advantages.

In the support leg structure provided by the present invention, a height indication member is arranged on the seat cover, and the height indication member includes a first indication area and a second indication area. When the state of the supporting assembly changes, one of the first indication area and the second indication area is exposed to show a height range corresponding to the current state of the supporting assembly, and a user can observe the height range shown in the first indication area or the second indication area through the indication window on the seat cover. As such, the user can learn a height range of children who require the use of the supporting assembly when using the safety seat.

### BRIEF DESCRIPTION OF THE DRAWINGS

FIG. 1 is an exploded view of a support leg structure according to the present invention.
FIG. 2 is a schematic structural diagram of a supporting assembly in a support leg structure according to the present invention.
FIG. 3 is a schematic structural diagram of a height indication member in a support leg structure according to the present invention.
FIG. 4 is a schematic structural diagram of a seat cover and a height indication member in a support leg structure according to the present invention.
FIG. 5 is a partially enlarged view of part A in FIG. 4.
FIG. 6 is a schematic structural diagram of a supporting assembly and a seat base when a supporting assembly is in a retracted state in a support leg structure according to the present invention.
FIG. 7 is a schematic structural diagram of a supporting assembly and a seat base when a supporting assembly is in a service state in a support leg structure according to the present invention.
FIG. 8 is a schematic structural diagram of a height indication member and a seat cover when a supporting assembly is in a retracted state in a support leg structure according to the present invention.
FIG. 9 is a schematic structural diagram of a height indication member and a seat cover when a supporting assembly is in a service state in a support leg structure according to the present invention.

In the drawings, the reference numerals respectively represent: 100. supporting assembly; 110. connection base; 111. pressing block; 120. supporting member; 121. outer tube; 122. inner tube; 123. adjustment assembly; 200. seat base; 210. first slide groove; 220. locking assembly; 300. seat cover; 310. positioning column; 320. indication window; 330. elastic reset member; 400. height indication member; 410. first end; 411. second slide groove; 420. second end; 421. first indication area; 422. second indication area.

### DETAILED DESCRIPTION OF THE EMBODIMENTS

The present invention will be further described below through specific embodiments. It should be noted that the embodiments or technical features described below may be arbitrarily combined to form new embodiments without conflict.

In the description of the present invention, it should be noted that orientation and position relationships indicated by the orientation terms such as "center", "transverse", "longitudinal", "length", "width", "thickness", "on", "below", "front", "rear", "left", "right", "vertical", "horizontal", "top", "bottom", "inner", "outer", "clockwise", and "counterclockwise" are based on the orientation or positional relationships shown in the drawings, and are only for the convenience of describing the present invention and simplifying the description, rather than indicating or implying that the apparatus or element described must have a specific orientation or be constructed and operated in a specific orientation, and therefore are not to be construed as limiting the present invention.

It should be noted that in the specification and claims of the present invention, the terms such as "first" and "second" are intended to distinguish between similar objects but do not indicate a particular order or sequence.

In the specification and claims of the present invention, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

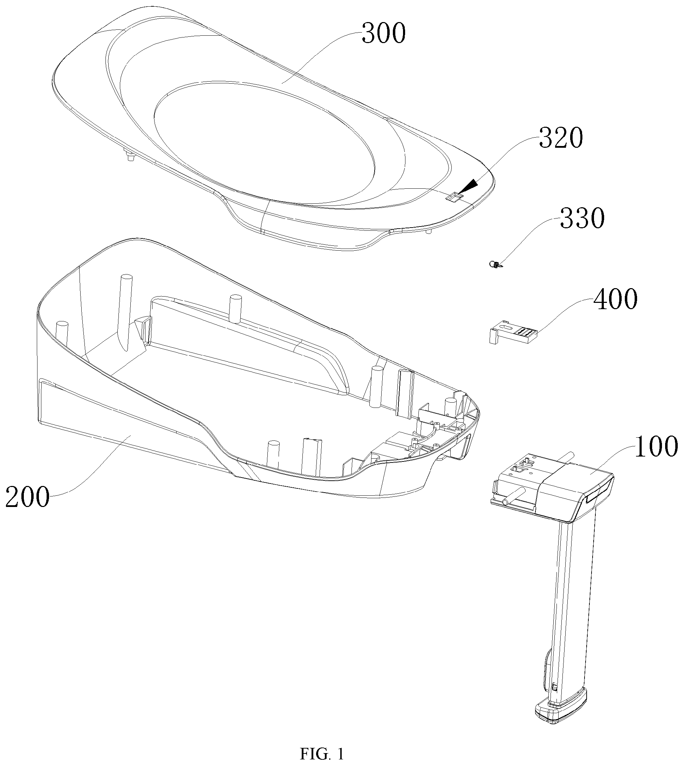

Referring to FIG. 1, an embodiment provides a support leg structure, which includes a supporting assembly 100, a seat base 200, and a seat cover 300 arranged on the seat base 200. The supporting assembly 100 is arranged in a cavity defined by the seat base 200 and the seat cover 300. The supporting assembly 100 is configured to switch between a retracted state and a service state under an external force. When a user needs to use the support leg structure, the user may switch the supporting assembly 100 to the service state. When the user does not need to use the support leg structure, the user may switch the supporting assembly 100 to the retracted state. A height indication member 400 is further arranged in the cavity between the seat base 200 and the seat cover 300. The height indication member 400 is configured to show different height ranges depending on different states of the supporting assembly 100.

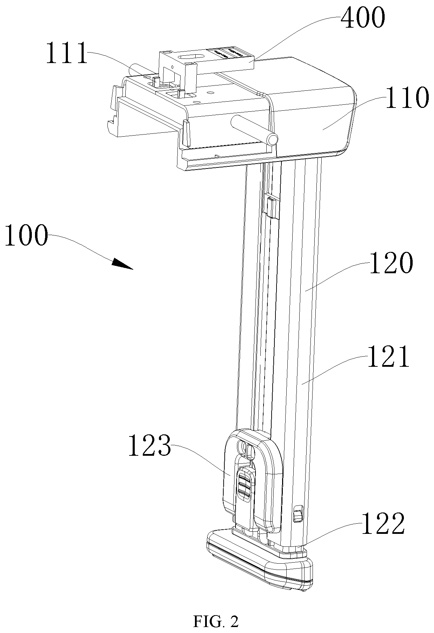

Further, as shown in FIG. 2, the supporting assembly 100 specifically includes a connection base 110 and a supporting member 120 arranged on the connection base 110, a first end of the supporting member 120 is fixedly arranged on the connection base 110, and a second end of the supporting member 120 is configured to press against a vehicle compartment. As such, when the supporting assembly 100 is in the service state, the supporting member 120 can support a child safety seat and provide an anti-overturning effect for the child safety seat, to prevent the child safety seat from turning over when the vehicle suddenly brakes. The supporting member 120 is preferably a telescopic structure. The supporting member 120 includes an inner tube 122 and an outer tube 121 vertically slidably connected to each other. A bottom of the inner tube 122 is configured to press against a base plate of the vehicle compartment. An adjustment assembly 123 is arranged between the inner tube 122 and the outer tube 121 to achieve mutual locking and multi-level adjustment of the inner tube 122 and the outer tube 121, which enables the supporting member 120 to adapt to vehicles with different seat heights, thereby providing higher applicability. In addition, when the supporting assembly 100 is in the retracted state, the inner tube 122 can be retracted into the outer tube 121, thereby reducing the space occupied by the supporting member 120.

The seat base 200 is further provided with a first slide groove 210, and the connection base 110 is movably arranged in the first slide groove 210, so that the connection base 110 can slide in the first slide groove 210 to drive the supporting member 120 to slide back and forth between an extended position and a retracted position, causing the supporting assembly 100 to switch between the service state and the retracted state. The seat base 200 is provided with a locking assembly 220 configured to fit to the connection base 110. The locking assembly 220 is configured to lock the connection base 110 to retrain the connection base 110 and the supporting member 120 at the extended position or the retracted position, or unlock the connection base 110 to allow the connection base 110 to slide back and forth between the extended position and the retracted position. Specifically, when the connection base 110 is locked by the locking assembly 220, the locking assembly 220 is engaged with the connection base 110 to restrict the connection base 110 from sliding. As such, the supporting member 120 is kept at the extended position or the retracted position, and the entire supporting assembly 100 is kept in the service state or the retracted state, thereby preventing the supporting assembly 100 from changing from the service state to the retracted state or from the retracted state to the service state under an external force during the use of the child safety seat to affect the normal use of the support leg structure. The locking assembly 220 may be a locking structure commonly used in the prior art, such as a snap-fit block or a limiting buckle.

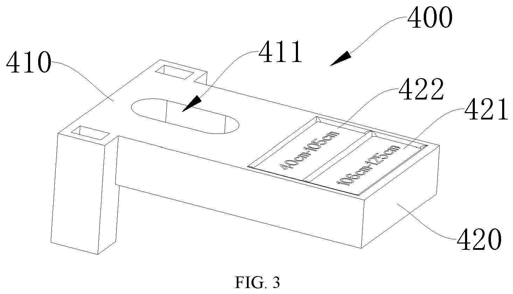

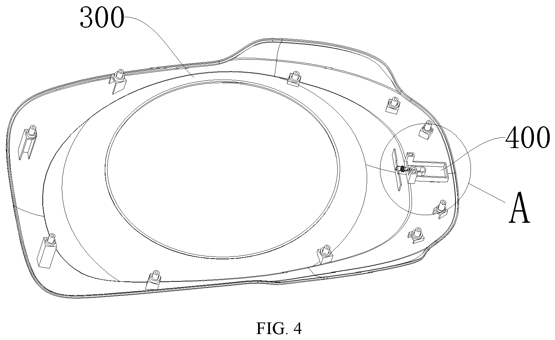

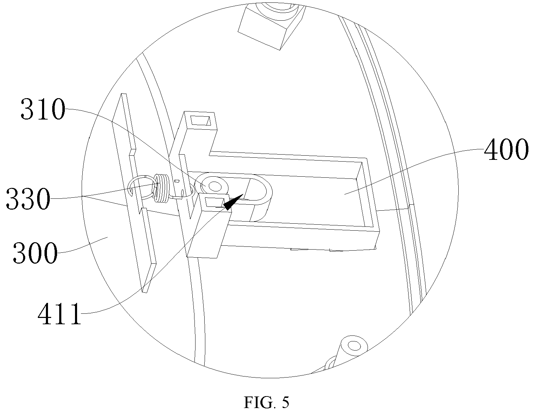

As shown in FIG. 3 to FIG. 5, the height indication member 400 is arranged on the seat cover 300, and the height indication member 400 is configured to show different applicable height ranges depending on changes in the state of the supporting assembly 100. The height indication member 400 specifically includes a first end 410 and a second end 420. The first end 410 is provided with a second slide groove 411. The second slide groove 411 extends in a length direction of the height indication member 400. A positioning column 310 configured to fit to the second slide groove 411 is fixedly arranged at a bottom of the seat cover 300. The positioning column 310 is a cylindrical hollow structure extending toward the height indication member 400 in a vertical direction. The positioning column 310 is slidable in the second slide groove 411. The height indication member 400 is configured to slide back and forth between a first working position and a second working position under an external force.

A first indication area 421 and a second indication area 422 are arranged on the second end 420 of the height indication member 400. The first indication area 421 is configured to show a height range not requiring use of the supporting assembly 100. The second indication area 422 is configured to show a height range requiring the use of the supporting assembly 100. The height indication member 400 is configured to present the first indication area 421 when the supporting assembly 100 is in the retracted state. The height indication member 400 is configured to present the second indication area 422 when the supporting assembly 100 is in the service state. The height range shown in the first indication area 421 is 106 cm to 125 cm, and the height range shown in the second indication area 422 is 40 cm to 105 cm. The height ranges are merely examples, and specific values of the height ranges shown in the first indication area 421 and the second indication area 422 are not limited in this embodiment. The specific values of the height ranges shown can be determined according to different types of child safety seats.

As shown in FIG. 1 to FIG. 9, an indication window 320 is provided on the seat cover 300 at a position corresponding to the height indication member 400, and one of the first indication area 421 and the second indication area 422 is exposed through the indication window 320, allowing a user to observe the height range shown in the first indication area 421 or the second indication area 422 through the indication window 320. The indication window 320 is an elongated through hole. The height indication member 400 is configured to move in a left-right direction relative to the indication window 320. When the supporting assembly 100 is in the retracted state, only the first indication area 421 is exposed through the indication window 320. When the supporting assembly 100 is in the service state, only the second indication area 422 is exposed through the indication window 320. In this embodiment, the arrangement of the indication window 320 to show the corresponding height ranges makes the indication more concise and clearer.

A pressing block 111 is further arranged on the connection base 110. The pressing block 111 extends toward the height indication member 400 in the vertical direction and is configured to contact with and press against the first end 410 of the height indication member 400 to drive the height indication member 400 to slide from the first working position to the second working position.

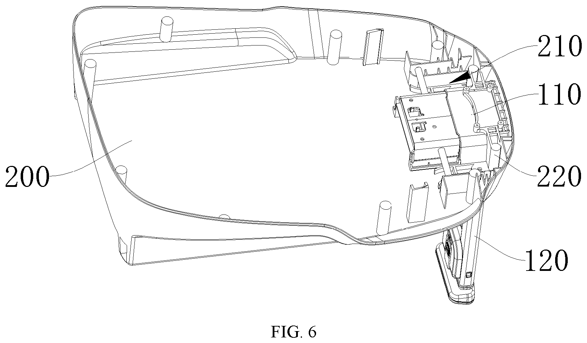

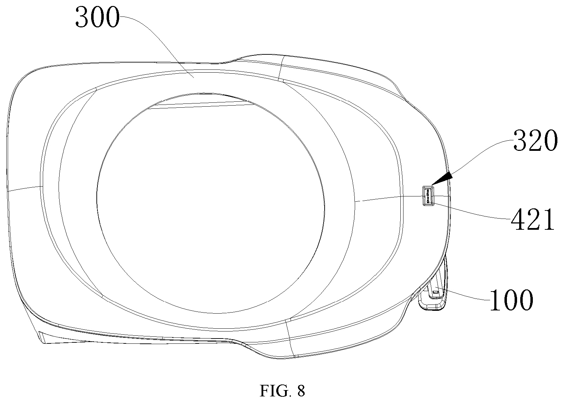

As shown in FIG. 6 and FIG. 8, when a user does not need to use the supporting assembly 100, the supporting assembly 100 is in the retracted state, the connection base 110 is at the retracted position, and the height indication member 400 is at the first working position. In this case, the first indication area 421 is exposed through the indication window 320, and the user can observe the height range shown in the first indication area 421 through the indication window 320. As such, the user can know a height range of children who do not need to use the supporting assembly 100.

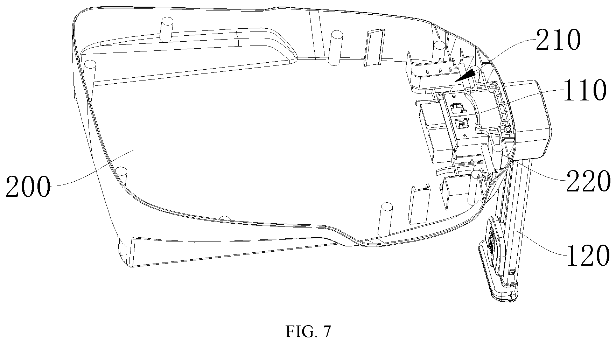

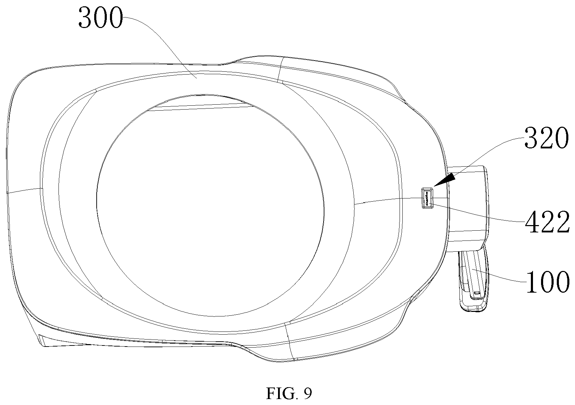

As shown in FIG. 7 and FIG. 9, when a user needs to use the supporting assembly 100, the user operates the supporting member 120, so that the connection base 110 is driven by the supporting member 120 to slide from the retracted position to the extended position. During the sliding of the connection base 110, the height indication member 400 is driven by the pressing block 111 to slide from the first working position to the second working position. In this case, the second indication area 422 is exposed through the indication window 320, and the user can observe the height range shown in the second indication area 422 through the indication window 320. As such, the user can compare a height of a child using the safety seat with the height range shown in the second indication area 422 to determine whether the supporting assembly 100 needs to be used.

An elastic reset member 330 is further arranged between the height indication member 400 and the seat cover 300. When the external force applied to the height indication member 400 is released, the height indication member 400 is configured to be reset from the second working position to the first working position under an elastic restoring force of the elastic reset member 330. In other words, when the connection base 110 is driven by the supporting member 120 to slide from the extended position to the retracted position, the height indication member 400 can be automatically reset to the first working position, so that the first indication area 421 is exposed through the indication window 320. The elastic reset member 330 may be any elastic energy storage material, e.g., an elastic tension spring, elastic rubber, etc. In this embodiment, the elastic reset member 330 is an elastic tension spring, a first end of the elastic tension spring is mounted to a fixed base of the seat cover 300, and a second end of the elastic tension spring is mounted to the first end 410 of the height indication member 400. Specifically, when the connection base 110 is driven by the supporting member 120 to slide from the retracted position to the extended position, the height indication member 400 is driven by the pressing block 111 on the supporting member 120 to slide from the first working position to the second working position. In this case, the second indication area 422 is exposed through the indication window 320, and the elastic tension spring is stretched and deformed. When the connection base 110 is driven by the supporting member 120 to slide from the extended position back to the retracted position, the pressing block 111 on the connection base 110 is separated from the height indication member 400, and a force applied by the connection base 110 to the height indication member 400 is released accordingly, so that the elastic tension spring recovers to pull the height indication member 400 from the second working position back to the first working position. In this case, the first indication area 421 is exposed through the indication window 320.

Alternatively, in some other embodiments, the elastic reset member 330 is not arranged between the height indication member 400 and the seat cover 300, but instead, another pressing block 111 is further arranged on the connection base 110. The two pressing blocks 111 can respectively press against the first end 410 and the second end 420 of the height indication member. As such, when the connection base 110 slides from the retracted position to the extended position, the pressing block 111 adjacent to the first end 410 presses against the first end 410 of the height indication member 400, and pushes the height indication member 400 to slide from the first working position to the second working position. When the connection base 110 slides from the extended position to the retracted position, the another pressing block 111 adjacent to the second end 420 presses against the second end 420 of the height indication member 400, and pushes the height indication member 400 to slide from the second working position to the first working position. As such, the position of the height indication member 400 can be kept in line with the state of the supporting assembly 100. In other words, the height indication member 400 is at the second working position when the supporting assembly 100 is in the service state, and is at the first working position when the supporting assembly 100 is in the retracted state.

In some other embodiments, the height indication member 400 may be directly fixedly arranged on the connection base 110 to slide along with the connection base 110.

Another aspect of the present invention provides a child safety seat including the support leg structure described above.

The basic principles, main features and advantages of the present invention have been described above. Those skilled in the art should understand that the present invention is not limited to the above embodiments. The descriptions of the embodiments and the specification are only for illustrating the principles of the present invention. Various changes and improvements may be made to the present invention without departing from the spirit and scope of the present invention, and such changes and improvements all fall within the scope of protection claimed by the present invention. The scope of protection claimed by the present invention is defined by the appended claims and their equivalents.

## Claims

1. A support leg structure, comprising a seat base, and a seat cover arranged on the seat base, wherein a supporting assembly is slidably arranged on the seat base, and the supporting assembly is configured to extend or retract relative to the seat base to switch between a retracted state and a service state, **characterized in that**, a height indication member is movably arranged on the seat cover, at least one indication area is arranged on the height indication member, the at least one indication area is configured to show different height ranges, an indication window corresponding to the height indication member is provided on the seat cover, and when the supporting assembly switches between the retracted state and the service state, the supporting assembly is configured to drive the height indication member to slide relative to the indication window, to expose one of the at least one indication area through the indication window.

2. The support leg structure according to claim 1, **characterized in that** the height indication member is provided with a second slide groove, the second slide groove extends in a length direction of the height indication member, a positioning column configured to fit to the second slide groove is arranged on the seat cover, and the height indication member is configured to be driven by the supporting assembly to slide between a first working position and a second working position.

3. The support leg structure according to claim 2, **characterized in that** a first indication area and a second indication area are arranged on the height indication member, the first indication area is configured to show a height range not requiring use of the supporting assembly, the second indication area is configured to show a height range requiring the use of the supporting assembly, the first indication area is exposed through the indication window when the height indication member slides to the first working position, and the second indication area is exposed through the indication window when the height indication member slides to the second working position.

4. The support leg structure according to claim 3, **characterized in that** values in the height range shown in the first indication area are greater than values in the height range shown in the second indication area.

5. The support leg structure according to claim 3, **characterized in that** the supporting assembly comprises a connection base movably arranged in the seat base and a supporting member arranged on the connection base, the supporting member extends to outside of the seat base, the supporting member is operable to drive the connection base to slide back and forth between an extended position and a retracted position, the connection base is at the retracted position when the supporting assembly is in the retracted state, and the connection base is at the extended position when the supporting assembly is in the service state.

6. The support leg structure according to claim 5, **characterized in that** the seat base is provided with a locking assembly configured to fit to the connection base, and the locking assembly is configured to lock the connection base to retrain the connection base at the extended position or the retracted position, to keep the supporting assembly in the service state or the retracted state.

7. The support leg structure according to claim 5, **characterized in that** the supporting member comprises an inner tube and an outer tube vertically slidably connected to each other, a top of the outer tube is arranged on the connection base, a bottom of the inner tube is configured to press against a base plate of a vehicle compartment, and an adjustment assembly is arranged between the inner tube and the outer tube to achieve mutual locking and multi-level adjustment of the inner tube and the outer tube.

8. The support leg structure according to any one of claims 5 to 7, **characterized in that** a pressing block is arranged on the connection base, the pressing block is configured to press against and fit to the height indication member, and when the connection base slides from the retracted position to the extended position, the connection base is configured to drive, through the pressing block, the height indication member to slide from the first working position to the second working position.

9. The support leg structure according to claim 8, **characterized in that** an elastic reset member is arranged between the seat cover and the height indication member, the elastic reset member is configured to continuously apply an acting force to cause the height indication member to move toward the first working position, and when an external force applied by the connection base to the height indication member is released, the height indication member is configured to be reset from the second working position to the first working position under action of the elastic reset member.

10. A child safety seat, **characterized by** comprising the support leg structure according to any one of claims 1 to 9.
